# EUROPEAN PATENT SPECIFICATION

(11) **EP 2 520 620 B1**
(45) Date of publication and mention of the grant of the patent: **16.09.2015**
(21) Application number: 09852799.7
(22) Date of filing: 28.12.2009
(51) Int. Cl.: C09D 5/16, C09D 5/02, C09D 133/00, C09D 151/06, C09D 157/06, C09D 157/10

(54) **METHOD FOR PRODUCING RESIN DISPERSION FOR ANTIFOULING COATING**
VERFAHREN ZUR HERSTELLUNG EINER HARZDISPERSION FÜR EINE BEWUCHSHEMMENDE BESCHICHTUNG
PROCÉDÉ DE FABRICATION D'UNE DISPERSION DE RÉSINE POUR PEINTURE ANTISALISSURES

(43) Date of publication of application: 07.11.2012
(73) Proprietor: Mitsubishi Rayon Co., Ltd., Tokyo 100-8253 (JP)
(72) Inventor: IWAMOTO, Akio, Toyohashi-shi Aichi 440-8601 (JP); TANUMA, Naomi, Toyohashi-shi Aichi 440-8601 (JP)
(74) Representative: Ter Meer Steinmeister & Partner
(86) International application number: PCT/JP2009/071755
(87) International publication number: WO 2011/080821

(56) References cited:
- WO-A1-99/12423
- WO-A1-2009/137678
- WO-A2-2008/008354
- JP-A- 11 172 159
- JP-A- 2004 197 101
- JP-A- 2004 277 491
- JP-A- 2009 221 243
- US-A1- 2006 188 664

## Description

### Technical Field

The present invention relates to a method for producing an antifouling coating resin dispersion using a water dispersion type metal-containing resin. In particular, the present invention relates to a method for producing an antifouling coating resin dispersion which can form a coating film preventing adhesion of underwater organisms and seaweeds to underwater structures, fishing nets, and ship bottoms.

### Background Art

A coating film formed of an antifouling coating exhibits an antifouling effect caused by elution of an antifouling chemical component contained in the coating film into sea. When a coating film formed of a collapsible antifouling coating using a rosin-based compound is immersed in sea for a long period of time, the proportion of an elution component decreases gradually, and the proportion of non-eluting component increases. Therefore, the surface of the coating film becomes uneven, which significantly reduces an effect of preventing adhesion of organisms such as marine organisms.

On the other hand, the surface of a coating film formed of a self-polishing type antifouling coating is gradually renewed (self-polished), and an antifouling component is constantly exposed on the surface of the coating film. Consequently, an antifouling effect is exhibited for a long period of time. However, these coatings contain a large amount of various organic solvents such as xylene and alcohol, and antifouling coatings have been variously considered in place of the coatings from the recent VOC (Volatile Organic Compound) problem.

As the self-polishing type antifouling coating, for example, an antifouling coating composition which contains a resin composition containing a resin having a metal-atom-containing group in a terminal part of a side chain as a vehicle is described in Patent Literature 1. Zn, Cu, and Te are described as the metal atom. '

An aqueous antifouling coating composition which contains a resin containing a divalent metal, water, a basic compound, and an alcohol-based compound is proposed in Patent Literature 2. As the divalent metal, ammonia and amine are described as Cu, Zn, Mg, Ca, and a basic compound. Patent Literature 2 describes that a resin containing a divalent metal is obtained by polymerizing a monomer mixture containing a polymerizable monomer containing a divalent metal.

In Patent Literature 3, a resin aqueous dispersion liquid having a unit having a divalent metal and a unit derived from a reactive emulsifier is proposed. As the divalent metal, Cu, Zn, Mg, and Ca are described. The resin aqueous dispersion liquid is described, which is obtained by subjecting a mixed solution which contains a polymerizable monomer containing a divalent metal, a reactive emulsifier, and an organic solvent to solution polymerization, subjecting the polymerized object to desolvation treatment if necessary, and mixing the polymerized object with water.

In Patent Literature 4, an aqueous antifouling coating is proposed, which contains an aqueous resin emulsion containing a carboxyl group and/or a metal carboxylate group in a resin molecule and having a resin acid value of 10 to 300 mgKOH/g obtained by emulsion polymerization, and an aqueous metal complex having carboxylic acid and a metal of a bivalence or more if necessary. As this metal, Cu, Zn, Ca, Mg, Zr, and Fe are described.

In Patent Literature 5, an aqueous antifouling resin composition is proposed, which contains an aqueous resin emulsion obtained by dispersing a resin in water using an emulsifier as a binder having antifouling properties. The resin has a metal carboxylate structure formed so that the equivalent ratio of a carboxyl group and a divalent metal in a base resin having an acid value of 10 to 300 mgKOH/g is set to 0.1 to 5 within a molecule and/or between molecules. As this divalent metal, Cu, Zn, Ca, and Mg are described.

### Citation List

### Patent Literature

Patent Literature 1: JP62-57464A
Patent Literature 2: JP2003-49123A
Patent Literature 3: JP2007-23243A
Patent Literature 4: JP2000-109729A
Patent Literature 5: JP11-172159A

WO 2009/137678 A1 relates to an improved method for making sulfonated block copolymers and to methods for making membranes from such block copolymers, and in particular, relates to a method for making sulfonated block copolymers having at least two polymer end blocks that are resistant to sulfonation and at least one polymer interior block that is susceptible to sulfonation where the sulfonation agent is C2 to C8 acyl sulfate. In the process the residual carboxylic acid formed from the C2 to C8 acyl sulfate is converted to C1 to C4 alkyl esters by contacting the residual carboxylic acid with at least a 0.9: 1 molar ratio of a C1 to C4 alcohol to residual carboxylic acid, resulting in a sulfonated block copolymer solution.

WO 2008/008354 A2 is directed to a process for the preparation of an aqueous dispersion of coacervates having a core-shell structure, the core (a) being an inorganic particle being anionic or cationic and the shell (b) being a copolymer wherein said copolymer comprises at least two parts, A and B, part A being cationic if particle (a) is anionic, and anionic if particle (a) is cationic, and part B being neutral in pH conditions of said dispersion, and is directed to treating compositions comprising that aqueous dispersion of coacervates delivering antifouling, water sheeting, antisoiling, anti-adhesion, adhesion, anti-deposition, and/or anti-UV properties onto all kinds of surfaces.

US 2006/188664 A1 relates to a coating composition for the formation of a low refractive index layer, comprising: a fluorine-containing olefin-based polymer that has a polysiloxane segment, has a fluorine content of 30 mass % or more, and contains a plurality of ethylenically unsaturated groups; and a hollow silica fine particle having an average particle diameter of 5 to 200 nm and a refractive index of 1.17 to 1.40.

WO 99/12423 A1 relates to the use of mixtures of (A) polymers and aminoisothiazols (B) in addition to the metal complexes and acid additive salts thereof as biocides.

### Summary of Invention

### Technical Problem

However, the antifouling coating described in Patent Literature 1 is used in a state where the antifouling coating is dissolved in a commonly used organic solvent. The antifouling coating does not satisfy an aqueous modification recently desired in environmental sanitation.

Because the aqueous antifouling coating of Patent Literature 2 contains a large amount of basic compound coordinated with the divalent metal, the basic compound is left in a coating film, which causes low water resistance and an adhesiveness problem of the coating film.

Because the reactive emulsifier in the aqueous antifouling coating of Patent Literature 3 is used as a constitutional unit of a copolymer, hydrophilic units such as an alkylene oxide derived from the emulsifier are left in a coating film, which causes a water resistance problem of the coating film in a long-term test.

In the aqueous antifouling coating of Patent Literature 4, a basic compound is left in a coating film when the aqueous metal complex of the carboxylic acid, the metal, and the basic compound is compounded in order to compensate lack of the divalent metal-containing monomer component introduced into the resin in the emulsion polymerization, which causes low water resistance of the coating film, low long-term antifouling properties, and an adhesiveness problem of the coating film,

The aqueous antifouling resin composition of Patent Literature 5 is obtained by compounding and adding the emulsifier to the resin dissolved in organic solvents such as xylene and butyl acetate, subjecting the resin to water dilution, and subjecting the resin to forcible emulsification. The aqueous antifouling resin composition causes a storage stability problem of the emulsion because a resin component is easily precipitated, and the aqueous antifouling resin composition is separated to a water layer and a resin-containing layer and solidified during preservation.

It is an object of the present invention to provide an antifouling coating resin dispersion which has excellent storage stability and water resistance in sea water, can exhibit an antifouling effect over a long period of time, and has self-polishing properties with excellent adhesiveness.

### Solution to Problem

A method for producing an antifouling coating resin dispersion of the present invention includes the steps recited in claim 1.

### Advantageous Effects of Invention

The present invention can provide an antifouling coating resin dispersion which has excellent storage stability and water resistance in sea water, can exhibit an antifouling effect over a long period of time, and has self-polishing properties with excellent adhesiveness.

### Description of Embodiments

A method for producing an antifouling coating resin dispersion of the present invention includes the steps of:
producing a polymer (A) containing at least one metal selected from the group consisting of Mg, Ca, Zn and Cu; and
dispersing the polymer (A) in a dispersion medium containing water or a mixture of water and an organic solvent,
wherein the polymer (A) containing a divalent metal is obtained by subjecting 1 to 40% by mass of a divalent-metal-containing ethylenically unsaturated monomer (a1), 0 to 8% by mass of a carboxyl-group-containing ethylenically unsaturated monomer (a2), 0 to 40% by mass of a hydroxyl-group-containing ethylenically unsaturated monomer (a3), and 99 to 22% by mass of another ethylenically unsaturated monomer (a4) to solution polymerization in a multi-stage which includes two or more stages, including the steps of subjecting the monomer mixture (b1) containing at least one carboxyl-group-containing ethylenically unsaturated monomer (a2) to solution polymerization, and subjecting the monomer mixture (b2) containing no carboxyl-group-containing ethylenically unsaturated monomer (a2) and the divalent-metal-containing ethylenically unsaturated monomer (a1) to solution polymerization.

### [Divalent-Metal-Containing Ethylenically unsaturated Monomer (a1)]

The amount of the divalent-metal-containing ethylenically unsaturated monomer (a1) used as a kind of raw material when preparing the polymer (A) is set to a range of 1 to 40% by mass based on 100% by mass of the total amount of the monomers (a1) to (a4) used as raw materials of the polymer (A). The amount is set to 1% by mass or more, to apply better self-polishing properties to a coating film to be formed. The amount is preferably 5% by mass or more, and more preferably 10% by mass or more. The amount is set to 40% by mass or less, to produce excellent balance of adhesiveness and hydrolysis properties, to maintain long-period self-polishing properties, and to further improve an antifouling effect. The amount is preferably 25% by mass or less, and more preferably 20% by mass or less.

It is preferable that the divalent-metal-containing ethylenically unsaturated monomer (a1), which is a monomer having a carboxyl group ionically bonded to a divalent metal, is a divalent-metal-containing ethylenically unsaturated monomer (a1a) having two unsaturated groups and/or a divalent-metal-containing ethylenically unsaturated monomer (a1b) represented by the following general formula (I).

CH₂=C(R¹)-COO-M-R² (I)

(wherein, M represents a divalent metal; R¹ represents a hydrogen atom or a methyl group; and R² represents an organic acid residue)

At least one metal selected from the group consisting of Mg, Ca, Zn, and Cu as the divalent metal contained in the divalent-metal-containing ethylenically unsaturated monomer (a1) is used from the viewpoint of solubility of the metal to water. Mg, Ca, and Zn are more preferable from the viewpoint of transparency of the obtained polymer (A), and Zn is still more preferable. The metals may be used singly or in combinations of two or more.

Examples of the monomer (a1a) include (meth)acrylate divalent metal salts such as magnesium acrylate [(CH₂=CHCOO)₂Mg], magnesium methacrylate [(CH₂=C(CH₃)COO)₂Mg], calcium acrylate [(CH₂=CHCOO)₂Ca], calcium methacrylate [(CH₂=C(CH₃)COO)₂Ca], zinc acrylate [(CH₂=CHCOO)₂Zn], zinc methacrylate [(CH₂=C(CH₃)COO)₂Zn], copper acrylate [(CH₂=CHCOO)₂Cu], and copper methacrylate [(CH₂=C(CH₃)COO)₂Cu]. One or two or more, suitably selected if necessary, of the monomers (a1a) can be used. Among them, zinc (meth)acrylate is preferably used because transparency of the polymer (A) obtained by solution polymerization is high, and hue of a coating film of an antifouling coating tends to be beautiful. Herein, "(meth)acrylate" means "acrylate" or "methacrylate".

The monomer (a1a) is obtained by a method for reacting an inorganic metal compound and a carboxyl-group-containing ethylenically unsaturated monomer (for example, acrylic acid and methacrylic acid) in a diluent such as an organic solvent, or a reactive diluent having a polymerizable unsaturated group and the like. A reaction product containing a monomer (a1a) component obtained by the method is preferable because the reaction product has excellent compatibility with the organic solvent or another monomer, and can be easily polymerized. The reaction is preferably performed in the presence of water. The content of the water in the reaction product is preferably set to a range of 0.01 to 30% by mass.

Examples of R² (organic acid residue) of the monomer (a1b) include those derived from monovalent organic acids such as monochloroacetic acid, monofluoroacetic acid, acetic acid, propionic acid, octylic acid, versatic acid, isostearic acid, palmitic acid, cresotinic acid, α-naphthoic acid, β-naphthoic acid, benzoic acid, 2,4,5-trichlorophenoxyacetic acid, 2,4-dichlorophenoxyacetic acid, quinolinecarboxylic acid, nitrobenzoic acid, nitronaphthalenecarboxylic acid, and pulvinic acid. These can be appropriately selected if necessary. Fatty acid (aliphatic monocarboxylic acid)-based residues such as fatty acid-based residues having 1 to 20 carbon atoms are preferable from the viewpoint of obtaining a coating film capable of preventing cracking and peeling over a long period of time and having high durability. R² (organic acid residue) in the formula (I) is a remaining portion except a proton from a carboxyl group of an organic acid, and is ionically bonded to a metal M in place of the proton.

Specific examples of the monomer (a1b) include magnesium monochloroacetate (meth)acrylate, calcium monochloroacetate (meth)acrylate, zinc monochloroacetate (meth)acrylate, copper monochloroacetate (meth)acrylate; magnesium monofluoroacetate (meth)acrylate, calcium monofluoroacetate (meth)acrylate, zinc monofluoroacetate (meth)acrylate, copper monofluoroacetate (meth)acrylate; magnesium acetate (meth)acrylate, calcium acetate (meth)acrylate, zinc acetate (meth)acrylate, copper acetate (meth)acrylate; magnesium propionate (meth)acrylate, calcium propionate (meth)acrylate, zinc propionate (meth)acrylate, copper propionate (meth)acrylate; magnesium octylate (meth)acrylate, calcium octylate (meth)acrylate, zinc octylate (meth)acrylate, copper octylate (meth)acrylate; magnesium versatate (meth)acrylate, calcium versatate (meth)acrylate, zinc versatate (meth)acrylate, copper versatate (meth)acrylate; magnesium isostearate (meth)acrylate, calcium isostearate (meth)acrylate, zinc isostearate (meth)acrylate, copper isostearate (meth)acrylate; magnesium palmitate (meth)acrylate, calcium palmitate (meth)acrylate, zinc palmitate (meth)acrylate, copper palmitate (meth)acrylate, magnesium cresotate (meth)acrylate, calcium cresotate (meth)acrylate, zinc cresotate (meth)acrylate, copper cresotate (meth)acrylate; magnesium α-naphtoate (meth)acrylate, calcium α-naphtoate (meth)acrylate, zinc α-naphtoate (meth)acrylate, copper α-naphtoate (meth)acrylate; magnesium β-naphtoate (meth)acrylate, calcium β-naphtoate (meth)acrylate, zinc β-naphtoate (meth)acrylate, copper β-naphtoate (meth)acrylate; magnesium benzoate (meth)acrylate, calcium benzoate (meth)acrylate, zinc benzoate (meth)acrylate, copper benzoate (meth)acrylate; magnesium 2,4,5-trichlorophenoxyacetate (meth)acrylate, calcium 2,4,5-trichlorophenoxyacetate (meth)acrylate, zinc 2,4,5-trichlorophenoxyacetate (meth)acrylate, copper 2,4,5-trichlorophenoxyacetate (meth)acrylate; magnesium 2,4-dichlorophenoxyacetate (meth)acrylate, calcium 2,4-dichlorophenoxyacetate (meth)acrylate, zinc 2,4-dichlorophenoxyacetate (meth)acrylate, copper 2,4-dichlorophenoxyacetate (meth)acrylate; magnesium quinolinecarboxylate (meth)acrylate, calcium quinolinecarboxylate (meth)acrylate, zinc quinolinecarboxylate (meth)acrylate, copper quinolinecarboxylate (meth)acrylate; magnesium nitrobenzoate (meth)acrylate, calcium nitrobenzoate (meth)acrylate, zinc nitrobenzoate (meth)acrylate, copper nitrobenzoate (meth)acrylate; magnesium nitronaphthalenecarboxylate (meth)acrylate, calcium nitronaphthalenecarboxylate (meth)acrylate, zinc nitronaphthalenecarboxylate (meth)acrylate, copper nitronaphthalenecarboxylate (meth)acrylate; magnesium pulvinate (meth)acrylate, calcium pulvinate (meth)acrylate, zinc pulvinate (meth)acrylate, copper pulvinate (meth)acrylate. One or two or more, suitably selected if necessary, of these monomers (a1b) can be used. Among them, the zinc-containing monomers are preferably used because transparency of the obtained resin component is high, and hue of a coating film is beautiful. Furthermore, fatty acid zinc (meth)acrylate (M of the formula (I) is zinc and R² is a fatty acid residue) is more preferably used from the viewpoint of durability of the coating film. Herein, "(meth)acrylate" means "acrylate" or "methacrylate".

The monomer (a1b) is obtained by a method for reacting an inorganic metal compound, a carboxyl-group-containing ethylenically unsaturated monomer, and a non-polymerizable organic acid corresponding to the organic acid residue R² in the formula (I) in a diluent such as an organic solvent, or a reactive diluent having a polymerizable unsaturated group and the like.

Combination of the monomer (a1a) and the monomer (a1b) as the divalent-metal-containing ethylenically unsaturated monomer (a1) is preferable from the viewpoint of maintaining self-polishing properties of a coating film to be formed for a long period of time, and sufficiently wasting the coating film to obtain good antifouling properties. In particular, combination of zinc (meth)acrylate as the monomer (a1a) with fatty acid zinc (meth)acrylate (M of the formula (I) is zinc and R² is a fatty acid residue) as the monomer (a1b) is more preferable.

In the case of combination of the monomer (a1 a) and the monomer (a1b) as the divalent-metal-containing ethylenically unsaturated monomer (a1), the molar ratio (a1a/a1b) of the monomer (a1a) and the monomer (a1b) is preferably set to a range of 10/90 to 90/10. The molar ratio (a1a/a1b) is preferably set to 90/10 or less because a coating film having better cracking resistance and adhesiveness is obtained. The molar ratio is preferably set to 10/90 or more because sufficient self-polishing properties of a coating film to be formed is maintained for a long period of time. The molar ratio is more preferably from 20/80 to 80/20, and still more preferably from 30/70 to 70/30.

A monomer mixture containing the monomer (a1a) and the monomer (a1b) can be obtained by reacting an inorganic metal compound, a carboxyl-group-containing ethylenically unsaturated monomer, and a non-polymerizable organic acid corresponding to the organic acid residue R² in the formula (I) in a diluent such as an organic solvent, or a reactive diluent having a polymerizable unsaturated group and the like.

In this case, the amount of the non-polymerizable organic acid used is preferably set to a range of 0.01 to 3-fold mol based on the inorganic metal compound, and more preferably a range of 0.01 to 0.95-fold mol. The amount of the non-polymerizable organic acid used is preferably 0.01-fold mol or more because solid deposition in a monomer mixture producing step is suppressed, and self-polishing properties and cracking resistance of a coating film become better. The amount is preferably 3-fold mol or less because antifouling properties of the coating film is maintained for a longer period of time. The amount of the non-polymerizable organic acid used is more preferably 0.1 to 0.7-fold mol.

As described later, even when the divalent-metal-containing ethylenically unsaturated monomer (a1) is not used for a raw material during synthesis of the polymer (A), a unit corresponding to (a1) may be contained in the polymer (A) by sequentially performing the following items (i) to (iii):
(i) subject a monomer mixture (b1) containing the carboxyl-group-containing ethylenically unsaturated monomer (a2) as a first stage raw material to first stage polymerization;
(ii) react a polymer obtained in the first stage and a divalent metal compound, to introduce a divalent metal into the polymer of the first stage; and
(iii) subject a monomer mixture (b3) containing the carboxyl-group-containing ethylenically unsaturated monomer (a2) as a second stage raw material to second stage polymerization in the presence of the reaction product.

### [Carboxyl-Group-Containing Ethylenically unsaturated Monomer (a2)]

The amount of the carboxyl-group-containing ethylenically unsaturated monomer (a2) used as a kind of raw material when preparing the polymer (A) is set to a range of 0 to 8% by mass based on 100% by mass of the total amount of the monomers (a1) to (a4) used as raw materials of the polymer (A). The amount is preferably 1 % by mass or more from the viewpoint of excellent storage stability, and more preferably 2% by mass or more. When the amount is more than 8% by mass, viscosity of the polymer is extremely increased, and water resistance and adhesiveness of a coating film are reduced. The amount is preferably 7% by mass or less, and more preferably 6% by mass or less. The carboxyl-group-containing ethylenically unsaturated monomer (a2) is an optional component.

Examples of the carboxyl-group-containing ethylenically unsaturated monomer (a2) include monomers of monobasic acids or dibasic acids such as methacrylic acid, acrylic acid, crotonic acid, vinylbenzoic acid, fumaric acid, itaconic acid, maleic acid, and citraconic acid; and monoesters of dibasic acid or acid anhydride monomers represented by monomethyl maleate, monoethyl maleate, monobutyl maleate, monooctyl maleate, monomethyl itaconate, monoethyl itaconate, monobutyl itaconate, monooctyl itaconate, monomethyl fumarate, monoethyl fumarate, monobutyl fumarate, monooctyl fumarate, monoethyl citraconate, monohydroxyethyl tetrahydrophthalate (meth)acrylate, monohydroxypropyl tetrahydrophthalate (meth)acrylate, monohydroxybutyl tetrahydrophthalate (meth)acrylate, monohydroxyethyl phthalate (meth)acrylate, monohydroxypropyl phthalate (meth)acrylate, monohydroxyethyl succinate (meth)acrylate, monohydroxypropyl succinate (meth)acrylate, monohydroxyethyl maleate (meth)acrylate, and monohydroxypropyl maleate (meth)acrylate and the like. One or two or more, suitably selected if necessary, of these can be used.

### [Hydroxyl-Group-Containing Ethylenically unsaturated Monomer (a3)]

The amount of the hydroxyl-group-containing ethylenically unsaturated monomer (a3) used as a kind of raw material when preparing the polymer (A) is set to a range of 0 to 40% by mass based on 100% by mass of the total amount of the monomers (a1) to (a4) used as raw materials of the polymer (A). The hydroxyl-group-containing ethylenically unsaturated monomer (a3) is optional component. The amount is set to 40% by mass or less, thereby water resistance of a coating film tends to improve and excellent adhesiveness is provided. The amount is preferably 30% by mass or less, and more preferably 20% by mass or less.

Examples of the hydroxyl-group-containing ethylenically unsaturated monomer (a3) include hydroxyl group-containing (meth)acrylate ester monomers such as 2-hydroxyethyl (meth)acrylate, 2-hydroxypropyl (meth)acrylate, 3-hydroxypropyl (meth)acrylate, 2-hydroxybutyl (meth)acrylate, and 4-hydroxybutyl (meth)acrylate; adducts of 2-hydroxyethyl (meth)acrylate with ethylene oxide, propylene oxide, γ-butyrolactone or ε-caprolactone and the like; dimers or trimers such as 2-hydroxyethyl (meth)acrylate and 2-hydroxypropyl (meth)acrylate; a monomer having a plurality of hydroxyl groups such as glycerol (meth)acrylate; and terminal hydroxy allylated polyether monomers such as ethylene glycol allyl ether, propylene glycol allyl ether, polyethylene glycol allyl ether, polypropylene glycol allyl ether, and polyethylene glycol-polypropylene glycol allyl ether. One or two or more, suitably selected if necessary, of these monomers can be used.

### [Another Ethylenically unsaturated Monomer Unit (a4)]

The amount of another ethylenically unsaturated monomer (a4) used as a kind of raw material when preparing the polymer (A) is set to a range of 99 to 22% by mass based on 100% by mass of the total amount of the monomers (a1) to (a4) used as raw materials of the polymer (A).

Another ethylenically unsaturated monomer (a4) is not particularly restricted as long as another ethylenically unsaturated monomer (a4) is a monomer having a polymerizable (C=C) double bond, unlike the divalent-metal-containing ethylenically unsaturated monomer (a1), the carboxyl-group-containing ethylenically unsaturated monomer (a2), and the hydroxyl-group-containing ethylenically unsaturated monomer (a3). The polymer (A) has a unit derived from another ethylenically unsaturated monomer (a4), and thereby excellent balance of flexibility, a crack resistance, peeling resistance, and long-period self-polishing properties of a coating film to be formed can be produced.

Examples of another ethylenically unsaturated monomer (a4) include (meth)acrylate ester monomers such as methyl (meth)acrylate, ethyl (meth)acrylate, 2-methoxyethyl (meth) acrylate, 2-ethoxyethyl (meth)acrylate, 2-butoxyethyl (meth)acrylate, butoxy diethylene glycol (meth)acrylate, methoxy triethylene glycol (meth)acrylate, methoxy polyethylene glycol (meth)acrylate, phenoxyethyl (meth)acrylate, 2-(2-ethylhexaoxy)ethyl (meth)acrylate, 1-methyl-2-methoxyethyl (meth)acrylate, 3-methoxybutyl (meth)acrylate, 3-methyl-3-methoxybutyl (meth)acrylate, m-methoxyphenyl (meth)acrylate, p-methoxyphenyl (meth)acrylate, o-methoxyphenylethyl (meth)acrylate, m-methoxyphenylethyl (meth)acrylate, p-methoxyphenyethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, lauryl (meth)acrylate, stearyl (meth)acrylate, behenyl (meth)acrylate, benzyl (meth)acrylate, phenyl (meth)acrylate, isobornyl (meth) acrylate, cyclohexyl (meth)acrylate, glycidyl (meth)acrylate, trifluoroethyl (meth)acrylate, and perfluorooctyl (meth)acrylate; primary and secondary amino group-containing vinyl monomers such as butylaminoethyl (meth)acrylate and (meth)acrylamide; tertiary amino group-containing vinyl monomers such as dimethylaminoethyl (meth)acrylate, diethylaminmoethyl (meth)acrylate, dimethylaminopropyl (meth)acrylate, dimethylaminobutyl (meth)acrylate, dibutylaminoethyl (meth)acrylate, dimethylaminoethyl (meth)acrylamide, and dimethylaminopropyl (meth)acrylamide; heterocyclic basic monomers such as vinylpyrrolidone, vinylpiridine, and vinylcarbazole; vinyl-based monomers such as styrene, vinyltoluene, α-methylstyrene, acrylonitrile, methacrylonitrile, vinyl acetate, and vinyl propionate; terminal alkoxy allylated polyether monomers such as methoxypolyethylene glycol allyl ether, methoxypolypropylene glycol allyl ether, butoxypolyethylene glycol allyl ether, butoxypolypropylene glycol allyl ether, methoxypolyethylene glycol-polypropylene glycol allyl ether, and butoxypolyethylene glycol-polypropylene glycol allyl ether; and polyfunctional monomers such as ethylene glycol di(meth)acrylate, diethylene glycol di(meth)acrylate, triethylene glycol di(meth)acrylate, polyethylene glycol di(meth)acrylate, 1,4-butanediol di(meth)acrylate, 1,6-hexanediol di(meth)acrylate, neopentyl glycol di(meth)acrylate, 1,9-nonanediol di(meth)acrylate, 1,10-decanediol di(meth)acrylate, trimethylolpropane tri(meth)acrylate, pentaerythritol tetra(meth)acrylate, dipentaerythritol hexa(meth)acrylate, allyl methacrylate, triallyl cyanurate, diallyl maleate, and polypropylene glycol diaryl ether. One or two or more, suitably selected if necessary, of these can be used.

A reactive emulsifier functioning as an emulsifier during polymerization reaction, copolymerized with a monomer, and forming a constitutional unit of the obtained copolymer can also be used as another ethylenically unsaturated monomer (a4). When the reactive emulsifier is introduced into the polymer (A), a unit derived from the reactive emulsifier contributes to improvement in dispersibility.

As such a reactive emulsifier, a surface active agent having a radical polymerizable double bond (C=C) between carbons can be used. Preferably, a nonionic surface active agent or an anionic surface active agent having a radical polymerizable double bond (C=C) between carbons can be used.

Examples of the reactive emulsifier include anionic reactive emulsifiers such as "Antox MS60" manufactured by Nippon Nyukazai Co., Ltd.; "Aquaron HS-05", "Aquaron HS-10", and "Aquaron HS-20" manufactured by Dai-ichi Kogyo Seiyaku Co., Ltd.; "Adekaria Soap SE10", "Adekaria Soap SR10", and "Adekaria Soap SR20" manufactured by ADEKA CORPORATION; and "Eleminol JS2" manufactured by Sanyo Chemical Industries, Ltd., and nonionic reactive emulsifiers such as "Aquaron RN-10", "Aquaron RN-20", and "Aquaron RN-30" manufactured by Dai-ichi Kogyo Seiyaku Co., Ltd.; and "Adekaria Soap NE10", "Adekaria Soap NE20", "Adekaria Soap NE30", and "Adekaria Soap ER10" manufactured by ADEKA CORPORATION. One or two or more, suitably selected if necessary, of these reactive emulsifiers can be used.

Among the hydroxyl-group-containing ethylenically unsaturated monomer (a3) or another ethylenically unsaturated monomers (a4), an allylated polyether monomer having poorer radical polymerization properties than that of a (meth)acrylate monomer can also be used as the reactive diluent when synthesizing the divalent-metal-containing ethylenically unsaturated monomer (a1), and when synthesizing the polymer (A). When synthesizing the divalent-metal-containing ethylenically unsaturated monomer (a1) or when synthesizing the polymer (A), it is necessary to charge a diluent such as an organic solvent into a reaction vessel as a reaction medium. However, the allylated polyether monomer is used as some or all of the organic solvent, and thereby the required amount of the organic solvent can be reduced, and the storage stability can be improved.

### [Polymer (A)]

The polymer (A) contained in the antifouling coating resin dispersion produced by the method of the present invention is synthesized by polymerizing the monomers (a1) to (a4) in two or more stages.

The polymer (A) is obtained by first subjecting a part of the monomers (a1) to (a4) used as raw materials to first stage polymerization in a diluent for dissolving the polymer (A) in the presence of a polymerization initiator, and thereafter subjecting the remainder of the monomers (a1) to (a4) to polymerization of the second and subsequent stages.

The polymer (A) is obtained through solution polymerization in a multi-stage which includes two or more stages including the steps of subjecting the monomer mixture (b1) containing at least one carboxyl-group-containing ethylenically unsaturated monomer (a2) to solution polymerization, and subjecting the monomer mixture (b2) containing no carboxyl-group-containing ethylenically unsaturated monomer (a2) and the divalent-metal-containing ethylenically unsaturated monomer (a1) to solution polymerization, from the viewpoint of storage stability of the polymer. The divalent-metal-containing ethylenically unsaturated monomer (a1) is preferably the monomer (a1a) or (a1b). The carboxyl group can be locally introduced into the polymer by employing such a multi-stage polymerization method. It is guessed that the introduction can improve dispersion stability and water resistance of a coating film and reduce viscosity of a water dispersion.

The polymerization order of the monomer mixtures (b1) and (b2) is no object. However, from the viewpoint of excellent dispersion stability of the polymer with time, it is preferable that the monomer mixture (b1) is polymerized, and the monomer mixture (b2) is then polymerized. When the monomer mixture (b2) is first polymerized and the monomer mixture (b1) is then polymerized, a generated metal ester portion is partially subjected to ester exchange under the action of the carboxyl group, and is dissociated, which may reduce stability.

The polymer (A) can be obtained by multi-stage solution polymerization including at least first stage polymerization for subjecting a monomer mixture (b1) containing at least one carboxyl-group-containing ethylenically unsaturated monomer (a2) to solution polymerization, a step of reacting a polymer obtained in the first stage polymerization and a divalent metal compound, and second stage polymerization for polymerizing a monomer mixture (b3) containing at least one carboxyl-group-containing ethylenically unsaturated monomer (a2) in the presence of the reaction product of the step.

In this method, the carboxyl group of the polymer obtained in the first stage polymerization and the divalent metal compound are reacted also when the divalent-metal-containing ethylenically unsaturated monomer (a1) is not used for a raw material, and thereby the unit of the divalent-metal-containing ethylenically unsaturated monomer (a1) can be introduced into the polymer.

A method for adding a metal to the carboxyl group of the polymer obtained in the first stage polymerization can be performed according to known methods described in JP62-57464A and JP08-209005A, for example. Specifically, the method can be performed by heating and stirring the polymer obtained in the first stage polymerization, a divalent metal oxide, a divalent metal hydroxide or a divalent metal chloride, and a monovalent organic acid or water at a temperature of the decomposition temperature of the polymer or less.

The diluent used for the polymerization reaction is not particularly restricted. Specific examples thereof include monohydric alcohols such as methyl alcohol, ethyl alcohol, n-propyl alcohol, isopropyl alcohol, n-butyl alcohol, isobutyl alcohol, tertiarybutyl alcohol, 2-butyl alcohol, 2-methoxyethanol, and 3-methyl-3-methoxybutanol; polyhydric alcohols such as ethylene glycol, 1,2-propylene glycol, 1,3-butylene glycol, 2,3-butylene glycol, 2-methyl-2,4-pentanediol, 2,4-pentanediol, 2,5-hexandiol, 2,4-heptane diol, diethylene glycol, dipropylene glycol, triethylene glycol, and glycerine; ketones such as acetone, methyl ethyl ketone, and acetylacetone; ethers such as methyl ethyl ether and dioxane; glycol ethers such as ethylene glycol monomethyl ether, ethylene glycol monoethyl ether, ethylene glycol mono-n-propyl ether, ethylene glycol monoisopropyl ether, ethylene glycol mono-n-butyl ether, ethylene glycol monoisobutyl ether, ethylene glycol mono-tertiary-butyl ether, ethylene glycol monohexyl ether, ethylene glycol monophenyl ether, propylene glycol monomethyl ether, propylene glycol monoethyl ether, propylene glycol mono-n-propyl ether, propylene glycol monoisopropyl ether, propylene glycol mono-n-butyl ether, propylene glycol monoisobutyl ether, propylene glycol mono-tertiary-butyl ether, ethylene glycol dimethyl ether, ethylene glycol diethyl ether, propylene glycol dimethyl ether, propylene glycol diethyl ether, diethylene glycol monomethyl ether, diethylene glycol monoethyl ether, diethylene glycol mono-n-propyl ether, diethylene glycol monoisopropyl ether, diethylene glycol mono-n-butyl ether, diethylene glycol monoisobutyl ether, diethylene glycol mono-tertiary-butyl ether, dipropylene glycol monomethyl ether, dipropylene glycol monoethyl ether, dipropylene glycol mono-n-propyl ether, dipropylene glycol monoisopropyl ether, dipropylene glycol mono-n-butyl ether, dipropylene glycol monoisobutyl ether, dipropylene glycol mono-tertiary-butyl ether, diethylene glycol dimethyl ether, diethylene glycol diethyl ether, dipropylene glycol dimethyl ether, dipropylene glycol diethyl ether, triethylene glycol monomethyl ether, triethylene glycol monoethyl ether, tripropylene glycol monomethyl ether, tripropylene glycol monoethyl ether, and triethylene glycol dimethyl ether; glycol acetates such as ethylene glycol monoacetate, ethylene glycol diacetate, ethylene glycol monomethyl ether acetate, ethylene glycol monoethyl ether acetate, ethylene glycol mono-n-propyl ether acetate, ethylene glycol monoisopropyl ether acetate, propylene glycol monomethyl ether acetate, propylene glycol monoethyl ether acetate, diethylene glycol monoacetate, diethylene glycol monomethyl ether acetate, diethylene glycol monoethyl ether acetate, dipropylene glycol monomethyl ether acetate, and triethylene glycol monomethyl ether acetate; aliphatic-based hydrocarbons such as n-pentane and n-hexane; aromatic-based hydrocarbons such as toluene, xylene, and solvent naphtha; and the allylated polyether monomer. These diluents may be used singly or in combinations of two or more. However, the diluents preferably contain an alcohol-based compound because production stability and water dispersion stability of the polymer (A) are excellent. From the viewpoint that the amount of the organic solvent can be reduced, the allylated polyether monomer is preferable as the diluent when the first stage polymerization is performed.

The polymerization initiator is not particularly restricted, and known polymerization initiators can be used. Examples thereof include organic peroxides such as t-butylperoxy-2-ethylhexanoate, di-t-butyl peroxide, lauryl peroxide, benzoyl peroxide, and t-butyl peroctoate; and azo-based compounds such as 2,2'-azobisisobutyronitrile (AIBN), and 2,2'-azobis(2-methylbutyronitrile) (AMBN). The polymerization initiators may be used singly or in combinations of two or more. The amount of the polymerization initiator used is not particularly restricted, and can be appropriately set.

Known chain transfer agents may be used for the polymerization reaction if necessary.

The molecular weight of the polymer (A) obtained as described above can be appropriately determined according to desired characteristics. For example, the weight-average molecular weight (Mw) can be set to a range of 1000 to 50000.

### [Antifouling Coating Resin Dispersion]

The antifouling coating resin dispersion of the present invention can be obtained by dispersing the polymer (A) obtained as described above in a dispersion medium containing water or a mixture of water and an organic solvent.

It is preferable that the polymer (A) is obtained by subjecting at least the carboxyl-group-containing ethylenically unsaturated monomer (a2) to solution polymerization in the presence or absence of the diluent for dissolving the polymer (A), thereafter neutralizing some or all of carboxyl groups in the obtained polymer, and thereafter dispersing the polymer in the dispersion medium from the viewpoint of smooth transition to an aqueous phase. The neutralization is performed by adding a basic compound to the polymer (A). The basic compound used is not particularly restricted. Preferred examples thereof include alkylamines such as ammonia (aqueous solution), trimethylamine, triethylamine, diisopropylethylamine, and butylamine; alcohol amines such as dimethylethanolamine, dimethylisopropanolamine, methyldiethanolamine, diethylethanolamine, triethanolamine, and butanolamine; morpholine; and isophoronediamine. The basic compounds may be used singly or in combinations of two or more. The basic compounds are added in an amount to be compounded to set a degree of neutralization (that is, a molar ratio of a neutralizer to an acid) to 40 to 150%, and preferably 60 to 120%. The pH of the antifouling coating resin dispersion according to the present invention is 6.0 to 11.0 and preferably 6.5 to 9.0.

It is preferable that the polymer (A) is obtained by subjecting at least the hydroxyl-group-containing ethylenically unsaturated monomer (a3) to solution polymerization, dispersing the polymer (A) in the dispersion medium, and further adding a hydroxyl functional crosslinking agent to cross-link the polymer (A), thereby improving film coating properties such as toughness and water resistance.

The hydroxyl functional crosslinking agent is not particularly restricted, and known hydroxyl functional crosslinking agents can be used. Examples thereof include amino resins such as a melamine resin and a benzoguanamine resin, and polyisocyanates such as an aliphatic isocyanate, an alicyclic isocyanate, and an aromatic isocyanate. Particularly, the polyisocyanate is preferably used from the viewpoint of a reaction temperature and coating film properties, and a water-soluble or water dispersion type hydroxyl functional crosslinking agent is more preferably used.

The amount of the hydroxyl functional crosslinking agent used is not particularly restricted, but the hydroxyl functional crosslinking agent can be used within the range of not reducing handling, film-forming properties, and antifouling properties.

The antifouling coating resin dispersion preferably contains the polymer (A) in the range of 20 to 60% by mass from the viewpoint of film-forming properties and antifouling properties.

Water or a mixture of water and an organic solvent can be used as the dispersion medium. The diluent used for the polymerization reaction of the polymer (A) can be used as the organic solvent. Alcohol-based compounds such as an alcohol and a glycol ether exemplified as the diluent used for the polymerization reaction are preferable as the diluent from the viewpoint of dispersibility. Of these, a monohydric alcohol having a comparatively low boiling point and having 1 to 6 carbon atoms, and preferably a monohydric alcohol having 2 to 4 carbon atoms can be suitably used as the alcohol. A glycol ether having 3 to 11 carbon atoms, and preferably 3 to 8 carbon atoms can be suitably used as the glycol ether.

The content of the diluent in the antifouling coating resin dispersion is preferably 0 to 20% by mass, and more preferably 0 to 10% by mass. When the content of the diluent exceeds the range by using the diluent for the polymerization reaction of the polymer (A) and the content of the diluent needs to be reduced, the diluent may be subjected to a removing operation (desolvation treatment) by vacuum distillation and the like if necessary.

Another antifouling agent may be compounded in the antifouling coating resin dispersion of the present invention if necessary. The antifouling agent may be appropriately selected and used depending on requisite abilities. Examples thereof include copper-based antifouling agents such as copper (I) oxide, copper thiocyanate, and copper powder; metal compounds of lead, zinc, and nickel and the like; amine derivatives such as diphenylamine; nitrile compounds; benzothiazole-based compounds; maleimide-based compounds; and pyridine-based compounds. These can be used singly or in combinations of two or more. Specific examples thereof include manganeseethylene bisdithiocarbamate, zincdimethyl dithiocarbamate, 2-methylthio-4-t-butylamino-6-cyclopropylamino-s-triazine, 2,4,5,6-tetrachloroisophthalonitrile, N,N-dimethyldichlorophenylurea, zinc ethylene bisdithiocarbamate, copper rhodanate, 4,5-dichloro-2-n-octyl-3(2H)isothiazolone, N-(fluorodichloromethylthio)phthalimide, N,N'-dimethyl-N'-phenyl-(N-fluorodichloromethylthio)sulfamide, zinc 2-pyridinethiol-1-oxide, tetramethylthiuram disulfide, Cu-10% Ni solid solution alloy, 2,4,6-trichlorophenylmaleimide, 2,3,5,6-tetrachloro-4-(methylsulfonyl)pyridine, 3-iodo-2-propynylbutylcarbamate, diiodomethyl p-trisulfone, bisdimethyldithiocarbamoylzincethylene bisdithiocarbamate, phenyl(bispyridyl)bismuth dichloride, 2-(4-thiazolyl)-benzimidazole, and pyridine-triphenylborane.

In the antifouling coating resin dispersion according to the present invention, silicon compounds such as dimethylpolysiloxane and silicone oil, and fluorine-containing compounds such as carbon fluoride can also be compounded for the purpose of imparting lubricity to the surface of a coating film and preventing adhesion of organisms.

Furthermore, the antifouling coating resin dispersion according to the present invention may contain various kinds of pigments, defoaming agents, pigment dispersing agents, leveling agents, anti-sag agents, matting agents, ultraviolet absorbers, antioxidants, heat resistance-improving agents, slip agents, antiseptic agents, plasticizers, another emulsion resins, water-soluble resins, and viscosity controlling agents and the like.

The coating film using the antifouling coating resin dispersion according to the present invention can be directly formed on the surface of a substrate of underwater structures such as ships, various fishing nets, bay facilities, oil fences, bridges, and submarine bases, or can be formed on the surface of the substrate by the intermediary of an undercoating film formed. The undercoating film can be formed by using wash primers, chlorinated rubber-based or epoxy-based primers, and intermediate coatings and the like. The antifouling coating resin dispersion of the present invention can be applied on the surface of the substrate or the undercoating film formed on the substrate by means such as brush coating, spray coating, roller coating, and dip coating, as the forming method of the coating film. The application amount can be generally set to an amount to give a thickness of a dry coating film of 10 to 400 µm. Drying of the coating film can be usually performed at room temperature, and heat drying may be performed if necessary.

### EXAMPLES

The following Examples and Comparative Examples illustrate the present invention further in detail, but do not limit the scope of the present invention. In the following Examples, "parts" are by mass. Antifouling coating resin dispersions prepared in Examples were evaluated by methods shown below.

### [Evaluation of Storage Stability]

As the evaluation of the storage stability of the antifouling coating resin dispersion, the antifouling coating resin dispersion was saved at a temperature of 40°C for 3 days, 10 days, and 1 month, and the absence or presence of a precipitate was visually confirmed. The evaluation was performed on the following criteria.
Good: A resin component is not deposited and separated after the lapse of a prescribed time, and a solidified material is not formed. Fair: A small amount of precipitate is dispersed by stirring.
Poor: A resin component is deposited, separated, and solidified, and is not redispersed even when the resin component is stirred.

### [Test of Degree of Wasting of Coating Film]

Each antifouling coating resin dispersion was applied by an applicator on a hard vinyl chloride plate of 50 mm x 50 mm x 2 mm (thickness) so that the dry film thickness was 120 µm, to produce a test plate. The test plate was attached to a rotation drum placed in sea water. The drum was rotated at a circumferential speed of 7.7 m/s (15 knot), and wasting thicknesses after 1 month and 3 months were measured.

### [Water Resistance Test]

Each antifouling coating resin dispersion was coated on a substrate made of a sand blasted steel plate on which an anti-corrosive coating had been previously coated so that the dry film thickness was 120 µm, to produce a test plate. The test plate was immersed in sterilization-filtrated sea water for 1 month. The test plate was then dried at room temperature of 20°C for 1 week, and the surface of the coating film was observed. The evaluation was performed on the following criteria.
Very Good: No cracking and peeling at all are observed.
Good: Slight cracking is observed.
Fair: Cracking and peeling are partially observed.
Poor: Cracking and peeling are observed on the whole surface.

### [Grid Peeling Test]

A test plate produced in the same manner as in the water resistance test was immersed in sterilization-filtrated sea water for 1 month. The test plate was then dried at room temperature of 20°C for 1 week, and grid peeling test was performed. In the grid peeling test, crosscuts reaching a substrate were put at intervals of 2 mm in the test plate, and 25 grids of 2 mm² was made. Sellotape (registered trademark) was stuck thereon, and was rapidly removed. The peeled grid state was observed. The evaluation was performed on the following criteria.
Very Good: No grid peeling and grid corner peeling at all are observed.
Good: Grid peeling is not present, but only a grid corner is peeled.
Fair: 1 to 12 grids are peeled.
Poor: 13 to 25 grids are peeled.

### [Production Example M1]

To a reaction vessel equipped with a stirrer, a temperature controller, and a dripping device, 66.3 parts of MFDG (dipropylene glycol monomethyl ether) and 41 parts of zinc oxide (ZnO) were added, and the mixture was heated up to 75°C while stirring. A mixture of 43 parts of methacrylic acid (MAA), 36 parts of acrylic acid (AA), and 5 parts of water was added dropwise thereto over 3 hours at constant speed. After completion of addition, the reaction solution changed from opaque white condition to transparent. Further, the solution was stirred for 2 hours, and 10 parts of MFDG was then added thereto, to obtain a transparent divalent-metal-containing ethylenically unsaturated monomer mixture M1. The amounts of the raw materials added, the metal content of the obtained divalent-metal-containing ethylenically unsaturated monomer mixture M1, and the solid content concentration are shown in Table 1.

### [Production Examples M2 and M3]

Divalent-metal-containing ethylenically unsaturated monomer mixtures M2 and M3 were produced in the amounts added shown in Table 1 in the same manner as in production example M1. In place of MFDG, PKA5001 was used in production example M2, and AG was used in production example M3.

[Table 1]

**[Table 1]**

| | Amount added (mass ratio) | | | | | | Metal content (% by mass) | Solid content concentration (% by mass) |
|---|---|---|---|---|---|---|---|---|
| | MAA | AA | ZnO | Water | Versatic acid | Acetic acid | | |
| Production example M1 | 43 | 36 | 41 | 5 | | | 16.2 | 54.8 |
| Production example M2 | 30 | 25 | 41 | | 53 | | 14.1 | 59.7 |
| Production example M3 | 39 | 32 | 41 | | | 6 | 16.5 | 55.0 |

### [Production Example P1]

To a reaction vessel equipped with a stirrer, a temperature controller, and a dripping device, 25.9 parts of MFDG (dipropylene glycol monomethyl ether) was added, and the mixture was heated up to 130°C while stirring.

### <Step 1>

Then, a mixture made of the following raw materials was added dropwise thereto over 1 hour at constant speed, and copolymerization reaction was further performed for 0.5 hour (hereinafter, this reaction step is referred to as a step 1):
acrylic acid (AA): 1 part
ethyl acrylate (EA): 14 parts
chain transfer agent (trade name: "Nofmer MSD" manufactured by NOF CORPORATION): 0.5 part
initiator (trade name: "Perbutyl O" manufactured by NOF CORPORATION): 1 part

### <Step 2>

Then, a mixture made of the following raw materials was added dropwise thereto over 3 hours at constant speed, and copolymerization reaction was further performed for 0.5 hour (hereinafter, this reaction step is referred to as a step 2):
divalent-metal-containing ethylenically unsaturated monomer mixture M1: 9.1 parts (solid content of divalent-metal-containing ethylenically unsaturated monomer: 5 parts)
methyl methacrylate (MMA): 25 parts
ethyl acrylate (EA): 45 parts
n-butyl acrylate (BA): 10 parts
chain transfer agent (trade name: "Nofmer MSD" manufactured by NOF CORPORATION): 1 part
initiator (trade name: "Perbutyl O" manufactured by NOF CORPORATION): 5 parts

Then, 0.5 parts of "Perbutyl O" was added, and polymerization reaction was further continued for 1 hour. Further, the temperature thereof was lowered to 80°C, and 1.1 parts of dimethylethanolamine (DMEA) was added. They were uniformly mixed, and 92.2 parts of deionized water was gradually added thereto, to obtain a polymer (A) water dispersion P1. The amounts of the raw materials added, the characteristic value of the polymer (A) water dispersion P1, and the storage stability are shown in Table 2.

### [Production Examples P2 to P12]

Polymer (A) water dispersions P2 to P12 were produced in amounts added shown in Table 2 in the same manner as in production example P1.

In production example P7, after the completion of the step 1, 7.1 parts of zinc hydroxide and 7 parts of versatic acid were added thereto, and they were stirred for 2 hours. The step 2 was then continued. The amount of a divalent-metal-containing ethylenically unsaturated monomer (a1) used in production example P7 was calculated as follows.

molecular weight obtained by excluding a hydrogen atom from AA: 71
molecular weight obtained by excluding a hydrogen atom from versatic acid: 174
formula weight of zinc hydroxide: 99.4
zinc atomic weight: 65.4
AA portion: 7.6 parts x 71/72 = 7.49 parts
zinc hydroxide portion: 7.1 parts x 65.4/99.4 = 4.67 parts
versatic acid portion: 7 parts x 174/175 = 6.96 parts
7.49 + 4.67 + 6.96 = 19.12

In production example P8, the same step as that of production example P1 was performed. Then, 7 parts of a hydroxyl functional crosslinking agent (trade name: "Bayhydur VPLS2336" manufactured by Bayer Corporation) was further added thereto, and they were continuously stirred as it is for 2 hours to obtain a polymer (A) water dispersion P8.

In production example P10, a monomer mixture containing a carboxyl-group-containing ethylenically unsaturated monomer (a2) and a divalent-metal-containing ethylenically unsaturated monomer mixture (M1) was polymerized in one stage without performing the step 2.

[Table 2]

**[Table 2]**

| Step | | | Production examples | | | | | | | | | | | |
|---|---|---|---|---|---|---|---|---|---|---|---|---|---|---|
| | | | P1 | P3 | P3 | P4 | P5 | P6 | P7 | P8 | P9 | P10 | P11 | P12 |
| Initial diluent added | | MFDG | 25.9 | 21.8 | 20 | 20 | | 20 | 20 | 20 | 21.8 | 21.8 | 30 | 21.8 |
| Initial reactive diluent added (a4) | | PKA 5006 | | | | | 20 | | | | | | | |
| Step 1 | Divalent-metal-containing ethylenically unsaturated monomer (a1) mixture | M1 | | | | | | | | | | 10(18.2) | | |
| | | M2 | | | | | | 20(33.5) | | | | | | |
| | Carboxyl-group-containing ethylenically unsaturated monomer (a2) | MAA | | | 6 | 6 | | | | 6 | | | | |
| | | AA | 1 | 2 | | | 5 | | 7.6 | | | 2 | 2 | 10 |
| | Hydroxyl-group-containing ethylenically unsaturated monomer (a3) | PKA 5001 | | | | | | 13.5 | 13.5 | | | | | |
| | Another ethylenically unsaturated monomer (a4) | MMA | | | | | | 10 | 10 | | | 20 | | |
| | | EA | 14 | 13 | | | | 31.5 | 32.4 | | 12 | 58 | 13 | 5 |
| | | BA | | | 9 | 9 | 5 | 10 | 10 | 9 | | 10 | | |
| | | SR10 | | | | | | | | | 3 | | | |
| | Initiator | Perbutyl 0 | 1 | 1 | 1 | 1 | 1 | 5 | 5 | 1 | 1 | 5 | 1 | 1 |
| | Chain transfer agent | Nofmer MSD | 0.5 | 0.5 | 0.5 | 0.5 | 0.5 | 1 | 1 | 0.5 | 0.5 | 1 | 0.5 | 0.5 |
| Compounds reacted | Zinc hydroxide | | | | | | | | 7.1 | | | | | |
| | Versatic acid | | | | | | | | 7 | | | | | |
| Step 2 | Dilvalent-metal-containing ethylenically unsaturated monomer (a1) mixture" | M1 | 5 (9.1 ) | 10 (18.2) | | | | | | | 10 (18.2) | | | 10 (18.2) |
| | | M2 | | | 20(33.5) | 30(50,3) | | | | 20(33.5) | | | | |
| | | M3 | | | | | 15(27.3) | | | | | | | |
| | Carboxyl-group-containing ethylenically unsaturated monomer (a2) | MAA | | | | | | 6 | 6 | | | | | |
| | Hydroxyl-group-containing ethylenically unsaturated monomer (a3) | HEA | | | | | | | | 3.5 | | | | |
| | | PKA 5001 | | | 13.5 | 20.3 | | | | 13.5 | | | | |
| | | AG | | | | | 12.3 | | | | | | | |
| | Another ethylenically unsaturated monomer (a4) | MMA | 25 | 20 | 10 | | 10 | | | 10 | 20 | | 30 | 20 |
| | | EA | 45 | 45 | 31.5 | 24.7 | 22.7 | | | 28 | 45 | | 45 | 45 |
| | | BA | 10 | 10 | 10 | 10 | 10 | 9 | 9 | 10 | 10 | | 10 | 10 |
| | Initiator | Perbutyl O | 5 | 5 | 5 | 5 | 5 | 1 | 1 | 5 | 5 | | 5 | 5 |
| | Chain transfer agent | Nofmer MSD | 1 | 1 | 1 | 1 | 1 | 0.5 | 0.5 | 1 | 1 | | 1 | 1 |
| DMEA added | | | 1.1 | 2.1 | 5.3 | 5.3 | 5.3 | 5.3 | 5.3 | 5.3 | | 2.1 | 2.1 | 10.5 |
| Delonized water added | | | 92.2 | 92.2 | 102.2 | 102.2 | 122.2 | 102.2 | 99.6 | 110.8 | 92.2 | 92.2 | 92.2 | 92.2 |
| Hydroxyl functional crosslinking agent | | VPLS 2336 | | | | | | | | 7 | | | | |
| Amounts of raw materials (a1) to (a4) used (% by mass) | | a1 | 5.0 | 10.0 | 20.0 | 30.0 | 15.0 | 20.0 | 19.1 | 20.0 | 10.0 | 10.0 | 0.0 | 10.0 |
| | | a2 | 1.0 | 2.0 | 6.0 | 6.0 | 5.0 | 6.0 | 6.0 | 6.0 | 0.0 | 2.0 | 2.0 | 10.0 |
| | | a3 | 0.0 | 0.0 | 13.5 | 203 | 12.3 | 13.5 | 13.5 | 17.0 | 0.0 | 0.0 | 0.0 | 0.0 |
| | | a4 | 94.0 | 88.0 | 60.5 | 43.7 | 67.7 | 60.5 | 61.4 | 57.0 | 90.0 | 88.0 | 98.0 | 80.0 |
| Polymer (A) water dispersion | Characteristic values | Viscosity (mPa·s) | 2000 | 1700 | 1200 | 800 | 1500 | 1700 | 1100 | 1000 | 1300 | 12400 | 2000 | 10200 |
| | | Solid content (% by mass) | 45.3 | 45.8 | 45.1 | 45.4 | 44.9 | 45.4 | 44.6 | 45.4 | 45.0 | 45.5 | 45.1 | 45.8 |
| | | Polymer metal amount (% by mass) | 1.5 | 2.9 | 4.7 | 7.1 | 4.5 | 4.7 | 4.7 | 4.4 | 2.9 | 2.9 | 0.0 | 2.9 |
| | Evaluation of storage stability | After 3 days | Good | Good | Good | Good | Good | Good | Good | Good | Good | Falr | Good | Good |
| | | After 10 days | Good | Good | Good | Good | Good | Good | Good | Good | Good | Fair | Good | Good |
| | | After 1 month | Good | Good | Good | Fair | Good | Fair | Fair | Good | Good | Poor | Good | Good |

| | | | | | | | | | | | | | | |
|---|---|---|---|---|---|---|---|---|---|---|---|---|---|---|
| PKA5006: methoxypolyethylene glycol allyl ether (trade name: "Uniox PKA 5006" manufactured by NOF CORPORATION) PKA5001: polyethylene glycol allyl ether (trade name: "Uniox PKA5001" manufactured by NOF CORPORATION) AG: ethylene glycol allyl ether (manufactured by Nippon Nyukazai Co., Ltd.) SR10: "Adekaria Soap SR10" (manufactured by ADEKA CORPORATION) *Mass parts of only monomer components are noted in brackets. | | | | | | | | | | | | | | |

### [Example 1]

30 parts of water was mixed with 222.2 parts of the polymer (A) water dispersion P1 obtained in production example P1 to obtain an antifouling coating resin dispersion. The amounts of raw materials compounded, and the results of test of degree of wasting, water resistance test, and grid peeling test of the obtained antifouling coating resin dispersion are shown in Table 3.

### [Examples 2 to 9]

Antifouling coating resin dispersions were prepared for production examples P2 to P9 in the same manner as in Example 1, and were evaluated. The results are shown in Table 3.

### [Comparative Examples 1 to 3]

Antifouling coating resin dispersions were prepared for production examples P10 to P12 in the same manner as in Example 1, and were evaluated. The results are shown in Table 3.

[Table 3]

**[Table 3]**

| | | | Examples | | | | | | | | | Comparative Examples | | |
|---|---|---|---|---|---|---|---|---|---|---|---|---|---|---|
| | | | 1 | 2 | 3 | 4 | 5 | 6 | 7 | 8 | 9 | 1 | 2 | 3 |
| Polymer (A) water dispersion | P1 | | 222.2 | | | | | | | | | | | |
| | P2 | | | 222.2 | | | | | | | | | | |
| | P3 | | | | 222.2 | | | | | | | | | |
| | P4 | | | | | 222.2 | | | | | | | | |
| | P5 | | | | | | 222.2 | | | | | | | |
| | P6 | | | | | | | 222.2 | | | | | | |
| | P7 | | | | | | | | 222.2 | | | | | |
| | P8 | | | | | | | | | 222.2 | | | | |
| | P9 | | | | | | | | | | 222.2 | | | |
| | P10 | | | | | | | | | | | 222.2 | | |
| | P11 | | | | | | | | | | | | 222.2 | |
| | P12 | | | | | | | | | | | | | 222.2 |
| | Water | | 30 | 30 | 20 | 20 | 0 | 20 | 20 | 20 | 30 | 30 | 30 | 30 |
| | MFDG | | 0 | 0 | 10 | 10 | 30 | 10 | 10 | 12.1 | 0 | 0 | 0 | 0 |
| Test of degree of wasting | Wasting thickness (µ) | After 1 month | 28 | 45 | 68 | 86 | 55 | 62 | 62 | 60 | 34 | 38 | 0 | 55 |
| | | After 3 months | 49 | 74 | 124 | 162 | 105 | 118 | 82 | 110 | 58 | 79 | 0 | - |
| | Monthly average wasting thickness(µ) | | 16.3 | 24.7 | 41.3 | 54.0 | 35.0 | 39.3 | 27.3 | 36.7 | 19.3 | 26.3 | 0.0 | - |
| Water resistance test | | | Good | Good | Good | Fair | Good | Good | Good | Very good | Fair | Fair | Good | Poor |
| Grid peeling test (adhesiveness) | | | Good | Good | Good | Good | Good | Good | Good | Very good | Good | Fair | Good | Poor |

The storage stability, that is, dispersion stability of each of the polymer (A) water dispersions P1 to P9 prepared in production examples P1 to P9 was excellent (Table 2). When the polymer (A) water dispersions P1 to P9 were stored for 1 month or more, precipitates were partially produced. However, the precipitate resin was dispersed by restirring. The antifouling coating resin dispersions (Examples 1 to 9) using the polymer (A) water dispersions P1 to P9 had excellent water resistance in sea water, and excellent self-polishing properties and adhesiveness (Table 3).

On the other hand, the polymer (A) water dispersion P10 prepared by polymerizing the monomer mixture in one stage without performing the step 2 had extremely high viscosity (Table 2). The antifouling coating resin dispersion using the polymer (A) water dispersion P10 (Comparative Example 1) had low water resistance and adhesiveness (Table 3). The antifouling coating resin dispersion (Comparative Example 2) using the polymer (A) water dispersion P11 prepared without using the divalent-metal-containing ethylenically unsaturated monomer (a1) exhibited no self-polishing properties (Table 3). The antifouling coating resin dispersion (Comparative Example 3) using the polymer (A) water dispersion P12 using 10% by mass of the carboxyl-group-containing ethylenically unsaturated monomer (a2) had extremely high viscosity (Table 2), and had low water resistance and adhesiveness (Table 3).

## Claims

1. A method for producing an antifouling coating resin dispersion comprising the steps of:
producing a polymer (A) containing at least one metal selected from the group consisting of Mg, Ca, Zn, and Cu; and
dispersing the polymer (A) in a dispersion medium containing water or a mixture of water and an organic solvent,
wherein the polymer (A) containing a divalent metal is obtained by subjecting 1 to 40% by mass of a divalent-metal-containing ethylenically unsaturated monomer (a1), 0 to 8% by mass of a carboxyl-group-containing ethylenically unsaturated monomer (a2), 0 to 40% by mass of a hydroxyl-group-containing ethylenically unsaturated monomer (a3), and 99 to 22% by mass of another ethylenically unsaturated monomer (a4) to solution polymerization in a multi-stage which includes two or more stages, comprising the steps of subjecting a monomer mixture (b1) containing at least one carboxyl-group-containing ethylenically unsaturated monomer (a2) to solution polymerization, and subjecting a monomer mixture (b2) containing no carboxyl-group-containing ethylenically unsaturated monomer (a2) and the divalent-metal-containing ethylenically unsaturated monomer (a1) to solution polymerization.

2. The method for producing an antifouling coating resin dispersion according to claim 1, wherein the polymer (A) is obtained through multi-stage solution polymerization comprising at least first stage polymerization for subjecting a monomer mixture (b1) containing at least one carboxyl-group-containing ethylenically unsaturated monomer (a2) to solution polymerization, a step of reacting a polymer obtained in the first stage polymerization and a divalent metal compound, and second stage polymerization for polymerizing a monomer mixture (b3) containing at least one carboxyl-group-containing ethylenically unsaturated monomer (a2) in the presence of a reaction product of the step.

3. The method for producing an antifouling coating resin dispersion according to any one of claims 1 or 2, wherein the polymer (A) is obtained by subjecting at least the carboxyl-group-containing ethylenically unsaturated monomer (a2) to solution polymerization in the presence or absence of a diluent for dissolving the polymer (A), thereafter neutralizing some or all of carboxyl groups in the obtained polymer, and thereafter dispersing the polymer in the dispersion medium.

4. The method for producing an antifouling coating resin dispersion according to any one of claims 1 to 3, wherein the polymer (A) is obtained by subjecting at least the hydroxyl-group-containing ethylenically unsaturated monomer (a3) to solution polymerization, dispersing the polymer (A) in the dispersion medium, and further adding a hydroxyl functional crosslinking agent to the polymer (A) to cross-link the polymer (A).

5. An antifouling coating comprising an antifouling coating resin dispersion produced by the method according to any one of claims 1 to 4.

## Patentansprüche

1. Verfahren zur Herstellung einer Antifoulingbeschichtungs-Harzdispersion, umfassend die Schritte:
Herstellen eines Polymers (A), enthaltend mindestens ein Metall, gewählt aus der Gruppe, bestehend aus Mg, Ca, Zn und Cu; und
Dispergieren des Polymers (A) in einem Dispersionsmedium, enthaltend Wasser oder eine Mischung aus Wasser und einem organischen Lösungsmittel,
wobei das Polymer (A), enthaltend ein zweiwertiges Metall, erhalten wird durch Unterziehen von 1 bis 40 Masse-% eines ein zweiwertiges Metall enthaltenden, ethylenisch ungesättigten Monomers (a1), 0 bis 8 Masse-% eines carboxylgruppenhaltigen, ethylenisch ungesättigten Monomers (a2), 0 bis 40 Masse-% eines hydroxylgruppenhaltigen, ethylenisch ungesättigten Monomers (a3), und 99 bis 22 Masse-% eines anderen ethylenisch ungesättigten Monomers (a4) einer mehrstufigen Lösungspolymerisation, welche zwei oder mehr Stufen beinhaltet, umfassend die Schritte des Unterziehens einer Monomermischung (b1), enthaltend mindestens ein carboxylgruppenhaltiges, ethylenisch ungesättigtes Monomer (a2) einer Lösungspolymerisation, und Unterziehen einer Monomermischung (b2), enthaltend kein carboxylgruppenhaltiges, ethylenisch ungesättigtes Monomer (a2) und das ein zweiwertiges Metall enthaltende, ethylenisch ungesättigte Monomer (a1) einer Lösungspolymerisation.

2. Verfahren zur Herstellung einer Antifoulingbeschichtungs-Harzdispersion nach Anspruch 1, wobei das Polymer (A) erhalten wird durch mehrstufige Lösungspolymerisation, umfassend mindestens eine Erststufenpolymerisation zur Unterziehung einer Monomermischung (b1), enthaltend mindestens ein carboxylgruppenhaltiges, ethylenisch ungesättigtes Monomer (a2) einer Lösungspolymerisation, einen Schritt des Umsetzens eines in der Erststufenpolymerisation erhaltenen Polymers und einer zweiwertigen Metallerverbindung, und Zweitstufenpolymerisation zur Polymerisierung einer Monomermischung (b3), enthaltend mindestens ein carboxylgruppenhaltiges, ethylenisch ungesättigtes Monomer (a2) in Gegenwart eines Reaktionsprodukts aus dem Schritt.

3. Verfahren zur Herstellung einer Antifoulingbeschichtungs-Harzdispersion nach mindestens einem der Ansprüche 1 bis 2, wobei das Polymer (A) erhalten wird durch Unterziehen mindestens des carboxylgruppenhaltigen, ethylenisch ungesättigten Monomers (a2) einer Lösungspolymerisation in Gegenwart oder in Abwesenheit eines Verdünnungsmittels zum Lösen des Polymers (A), danach Neutralisieren eines Teils oder sämtlicher Carboxylgruppen in dem erhaltenen Polymer, und danach Dispergieren des Polymers in dem Dispersionsmedium.

4. Verfahren zur Herstellung einer Antifoulingsbeschichtungs-Harzdispersion nach mindestens einem der Ansprüche 1 bis 3, wobei das Polymer (A) erhalten wird durch Unterziehen mindestens des hydroxylgruppenhaltigen, ethylenisch ungesättigten Monomers (a3) einer Lösungspolymerisation, Dispergieren des Polymers (A) in dem Dispersionsmedium, und weiterhin Zugeben eines hydroxylfunktionellen Vernetzungsmittels zu dem Polymer (A), um das Polymer (A) zu vernetzen.

5. Antifoulingbeschichtung, umfassend eine Antifoulingbeschichtungs-Harzdispersion, hergestellt durch das Verfahren gemäß mindestens einem der Ansprüche 1 bis 4.

## Revendications

1. Un procédé pour la production d'une dispersion de résine de revêtement antisalissure comprenant les étapes de:
la production d'un polymère (A) comprenant au moins un métal choisi au sein du groupe constitué par le Mg, Ca, Zn et Cu; et
la dispersion du polymère (A) dans un agent dispersant comprenant de l'eau ou un mélange d'eau et d'un solvant organique,
le polymère (A) comprenant un métal divalent étant obtenu en soumettant 1 à 40% en poids d'un monomère (a1) éthyléniquement insaturé contenant un métal divalent, 0 à 8% en poids d'un monomère (a2) éthyléniquement insaturé contenant un groupe de carboxyle, 0 à 40% en poids d'un monomère (a3) éthyléniquement insaturé contenant un groupe hydroxyle, et 99 à 22% en poids d'un autre monomère (a4) éthyléniquement insaturé à une polymérisation en solution en multi-étapes, comprenant deux étapes ou plus, comprenant les étapes de la soumission d'un mélange (b1) de monomères comprenant au moins un monomère (a2) éthyléniquement insaturé comprenant un groupe de carboxyle à une polymérisation en solution, et la soumission d'un mélange (b2) de monomères comprenant pas de monomère (a2) éthyléniquement insaturé contenant un groupe de carboxyle et le monomère (a1) éthyléniquement insaturé contenant un métal divalent à une polymérisation en solution.

2. Le procédé pour la production d'une dispersion de résine de revêtement antisalissure selon la revendication 1, dans lequel le polymère (A) est obtenu par une polymérisation en solution multi-étapes comprenant au moins une première étape de polymérisation afin de soumettre un mélange (b1) de monomères comprenant au moins un monomère (a2) éthyléniquement insaturé contenant un groupe de carboxyle à une polymérisation en solution, une étape de réaction d'un polymère obtenu dans la première étape de polymérisation et d'un composé de métal divalent, et une deuxième étape de polymérisation afin de polymériser un mélange (b3) de monomères comprenant au moins un monomère (a2) éthyléniquement insaturé contenant un groupe de carboxyle en la présence d'un produit de réaction de l'étape.

3. Le procédé pour la production d'une dispersion de résine de revêtement antisalissure selon une quelconque des revendications 1 ou 2, dans lequel le polymère (A) est obtenu en soumettant au moins le monomère (a2) éthyléniquement insaturé contenant un groupe de carboxyle à une polymérisation en solution en la présence ou absence d'un diluent pour dissoudre le polymère (A), ensuite neutraliser quelques-uns ou tous les groupes de carboxyle dans le polymère obtenu, et ensuite disperser le polymère dans l'agent dispersant.

4. Le procédé pour la production d'une dispersion de résine de revêtement antisalissure selon l'une quelconque des revendications 1 à 3, dans lequel le polymère (A) est obtenu en soumettant au moins le monomère (a3) éthyléniquement insaturé contenant un groupe hydroxyle à une polymérisation en solution, en dispersant le polymère (A) dans l'agent dispersant, et en plus en ajoutant un agent de réticulation contenant une fonctionnalité hydroxyle au polymère (A) afin de réticuler le polymère (A).

5. Un revêtement antisalissure comprenant une dispersion de résine de revêtement antisalissure produit par un procédé selon l'une quelconque des revendications 1 à 4.
